# EUROPÄISCHE PATENTANMELDUNG

(11) **EP 1 980 774 A1**
(43) Veröffentlichungstag der Anmeldung: **15.10.2008**
(21) Anmeldenummer: 07007331.7
(22) Anmeldetag: 10.04.2007
(51) Int. Cl.: F16J 15/32

(54) **Dichtungsanordnung mit einem Radialwellendichtring**

(71) Anmelder: Carl Freudenberg KG, 69469 Weinheim (DE)
(72) Erfinder: Röhner, Gerhard, 69502 Hemsbach (DE); Flösser, Sven, 69469 Weinheim (DE); Mutterer, Heinz, 76532 Baden-Baden (DE); Kilthau, Andreas, Dr., 69483 Wald-Michelbach (DE); Kunkel, Anja, 69483 Wald-Michelbach (DE); Frenzel, Ulrich, Dr., 70839 Gerlingen (DE)

(57) **Zusammenfassung**

Dichtungsanordnung mit einem ein dynamisches Dichtelement haltenden Stützkörper und wenigstens einem Sensor zur Erfassung von Betriebszuständen, insbesondere der Drehzahl, Drehrichtung, Winkel der Welle, der Temperatur des Dichtelements und dem Druck des abzudichtenden Mediums und mit einem Stator zur Erzeugung elektrischer Energie, der mit einem mit der Welle verbundenen Multipolencoder zusammenwirkt, sowie einem Spannungsregler, einer Signalautbereftung, einem Sendemodul für eine drahtlose Signalübertragung, einer Antenne und einem Empfangsmodul mit einem Rechner für die Signale des Sendemoduls, dadurch gekennzeichnet, dass der Stützkörper 4 einen äußeren Ringflansch (13) hat, der mit dem Dichtelement (5) und der axialen Wand des Stützkörpers (4) einen Innenraum 14 bildet und bei dem der bzw. die Sensoren (18) und der Stator (15) m Innenraum (14) integriert sind.

## Beschreibung

### Technisches Gebiet

Die vorliegende Erfindung befasst sich mit einer Dichtungsanordnung, mit einem ein dynamisches Dichtelement haltenden Stützkörper und wenigstens einem Sensor zur Erfassung von Betriebszuständen, insbesondere der Drehzahl der Welle, der Temperatur der Dichtlippe und dem Druck des abzudichtenden Mediums, und einem Stator zur Erzeugung elektrischer Energie, der mit einem mit der Welle verbundenen Multipolencoder zusammenwirkt, sowie einem Spannungsregler, einem Sendemodul, einer Signalaufbereitung und einer Antenne für eine drahtlose Signalübertragung zu einem Rechner mit einem Empfangsmodul für die Signale des Sendemoduls.

### Stand der Technik

Durch die DE 197 40 348 A1 ist eine Dichtung bekannt geworden, bei der an der Welle ein multipolarer Ring mit einer Sendeeinheit angebracht ist, die mit einem Drehzahlgeber zusammenwirkt, der über eine Leitung an einen Rechner angeschlossen ist.

Bekannt ist außerdem durch die DE 43 12 424 C2 ein Gehäuseverschlussdeckel mit einem Drehzahlgeber, der mit einem Geberrad und einem dynamischen Dichtring zur Abdichtung einer Wellendurchführung in einer stirnseitigen Außenwand zusammenwirkt. Dabei sind der Drehzahlgeber und der dynamische Dichtring am Gehäuseverschlussdeckel angeordnet und liegen annähernd in der gleichen Ebene mit dem Geberrad. Das Geberrad seinerseits ist mit der Kurbelwelle drehfest verbunden und weist einen ringförmigen axialgerichteten äußeren Schenkel auf, der in Segmentfelder unterteilt ist. Dem dynamischen Dichtring ist eine Lauffläche eines auf der Kurbelwelle angebrachten Laufrings zugeordnet Laufring und Geberrad sind ein Teil.

Bekannt ist auch durch die EP 0 594 550 A1 eine Vorrichtung, bei der die Daten eines Lagers, die Drehzahl oder Temperatur, in Messwerte umgewandelt werden, die drahtlos zu einem Empfänger übermittelt werden. Die dafür benötigten Einrichtungen, wie Gleichrichter, Spannungsregler, Transmitter und Antenne, sind zu einer Einheit zusammengefasst.

Schließlich ist durch die DE 102 53 122 A1 eine Anordnung zur Erfassung der Drehbewegung einer Welle in einem Maschinengehäuse bekannt geworden, bei der die Messwertaufnehmer durch einen eigenen Energiespeicher mit Strom gespeist werden, wobei die Stromerzeugung für den Energiespeicher durch einen mit der Welle verbundenen Multipolring im zusammenwirken mit dem gegenüberliegenden Stator erfolgt. Der elektrische Strom wird über ein im Stromkreis eingesetzten Regler geregelt und es ist eine Signalsendeeinheit zur drahtlosen Übermittlung der Messwerte an eine gesondert vorhandene elektronische Steuereinrichtung vorgesehen.

### Darstellung der Erfindung

Der Erfindung liegt die Aufgabe zugrunde, eine Dichtungsanordnung zu schaffen, die besonders einfach in ihrem Aufbau ausgebildet ist, die möglichst geringe Abmessungen hat und sehr kompakt mit Mess-Sensoren, einer eigenen Energieerzeugung sowie einer drahtlosen Übertragung der ermittelten Signale ausgestattet ist.

Die Lösung der gestellten Aufgabe erfolgt mit den Merkmalen des Anspruchs 1.

Die Unteransprüche 2 bis 11 stellen vorteilhafte Ausgestaltungen des Erfindungsgegenstands dar.

Bei der vorliegenden Erfindung wird die Dichtungsanordnung mit einem Stützköper versehen, der einen äußeren Ringflansch hat und der mit dem an der Welle anliegenden Dichtelement einen Innenraum bildet, wobei der bzw. die Sensoren und der Stator in diesem Innenraum untergebracht und mit dem Dichtelement integriert sind. Die autonomische Spannungsversorgung, die ihre Energie aus einem Multipolencoder-Generator bezieht, ist in die Dichtung selbst integriert. Die auf den Multipolencoder aufmagnetisierten Magnetpole generieren bei Drehung in einer oder mehreren Spulen mit Weicheisenkemen elektrische Spannung. Diese kann zur Drehzahl-, Drehrichtung- und Drehwinkelerkennung verwendet werden. Dabei dient die gleichgerichtete und stabilisierte Spannung zur Spannungsversorgung der Sensoren und zur drahtlosen Messdatenübertragung von dichtungsrelevanten Messgrößen, wie z.B. der Temperatur der Dichtlippe oder dem Druck des umgebenden Mediums. Die Datenübertragung selbst kann mit standardisierten Protokollen, wie Bluetooth, Zigbee oder anderen erfolgen.

Es ist günstig wenn der Multipolencoder an einem mit der Welle verbundenen Träger angeordnet ist und zwischen dem Dichtelement und dem Stator eingefügt ist. Möglich ist auch eine Anbringung des Spannungsreglers, der Signalaufbereitung und des Sendemoduls auf der axialen Außenseite des Stützkörpers. Dies ist insbesondere dann günstig, wenn der Stützkörper auf seinen Außenseiten von einer Elastomerschicht ummantelt ist. Die Unterbringung von Spannungsregler, Signalaufbereitung und Sendemodul im Innenraum der Dichtungsanordnung lässt sich jedoch auch dann verwirklichen, wenn lediglich die Antenne des Sendemoduls auf der axialen Außenseite des Stützkörpers angeordnet wird und alle anderen Teile im Innenraum angebracht werden. Dabei kann beispielsweise die Elastomerschicht im Bereich der Antenne aufgehoben sein und die Antenne in Form einer Ringantenne auf der Außenseite des Stützkörpers angeordnet werden.

Die bevorzugte Ausführungsform der Dichtungsanordnung sieht vor, dass das Dichtelement ein Radialwellendichtring ist, der eine Dichtlippe hat, die von einer Spannfeder an die Welle gedrückt wird und darüber hinaus eine Staublippe hat.

Die im Innenraum angeordneten Teile der Dichtungsanordnung sind über Elektroleitungen mit den auf der Außenseite des Stützkörpers angeordneten Teilen verbunden. Dabei werden die Elektroleitungen abgedichtet durch die Elastomerschicht des Stützkörpers hindurchgeführt.

Durch die Erfindung wird eine besonders günstige Kombination der Stromerzeugung und Funkübertragung zusammen mit der Multipolencoder-Technologie und einer Dichtung erreicht. In geschlossenen Metallgehäusen stellen Elastomerbereiche für elektromagnetische Wellen/Spalten dar, durch welche die Funksignale ausgesandt und empfangen werden können. In die Dichtung integrierte Sensoren können deshalb ihre Informationen an räumlich getrennte Empfangsstationen liefern, ohne dass eine Vernetzung oder Spannungsversorgung von Außen erforderlich ist. Durch die Verwendung eines Multipolencoders zur Energieerzeugung können zusätzlich Drehzahl-, Drehrichtung- und Winkelstellung ermittelt und ebenfalls drahtlos übertragen werden. Die eingesetzten Sensoren können zur Funktionsüberwachung verwendet werden, wie z.B. zur Überwachung der Dichtfunktion, Temperatur, Druck und Drehzahl eines Aggregats, z.B. bei Anwendung eines Ringwellendichtrings mit integriertem Multipolgenerator ohne externe Spannungsversorgung oder Anbindung an ein Datennetz.

### Kurzbeschreibung der Zeichnung

Anhand zweier in der Zeichnung dargestellten Ausführungsbeispiele wird die Erfindung nachstehend näher erläutert:

Es zeigt:
- Fig. 1: Eine Dichtungsanordnung mit einem Radialwellendichtring in integrierter Bauweise im Schnitt, mit auf der Außenseite des Stützkörpers angeordnetem Spannungsregler, Signalaufbereitung und Sendemodul,
- Fig. 2: den Radialwellendichtring im Schnitt, bei dem lediglich die Antenne auf der Außenseite des Stützkörpers vorhanden ist.

### Ausführung der Erfindung

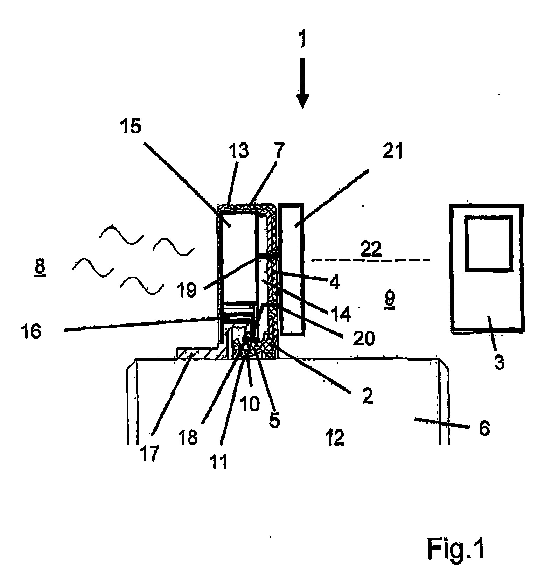

Die in der Figur 1 gezeigte Dichtungsanordnung 1 besteht aus einem Radialwellendichtring 2 mit integrierter Energieerzeugung und Sensorik und Sendemodul, sowie einem Empfangsmodul 3 mit Rechner. Der Radialwellendichtring 2 ist an sich bekannter Bauweise und besteht aus dem Stützkörper 4 mit dem Dichtelement 5, weiches seinerseits an der Welle 6 anliegt. Der Stützkörper 4 ist mindestens auf seiner Außenseite mit einer Elastomerschicht 7 ummantelt. Radialwellendichtringe 2 dieser Art werden zur Abdichtung eines mit einem Medium gefüllten Innenraums 8 von der Umgebung 9 verwendet. Der hier eingesetzte Radialwellendichtring 2, hat eine Dichtlippe 10, die von der Spannfeder 11 an die Welle 6 gedrückt wird. Das Dichtelement 5 ist außerdem mit der Staublippe 12 versehen. Der Stützkörper 4 hat auf seiner radial außen liegenden Seite einen Ringflansch 13, der mit dem Dichtelement 5 einen Innenraum 14 umgrenzt. In diesen Innenraum, der zur Innenseite hin offen ist, wird der Stator 15 und der Multipolencoder 16 eingesetzt. Dabei ist der Multipolencoder 16 mit der Welle 6 über den Träger 17 verbunden. Außerdem ist beispielsweise lediglich der Sensor 18 für die Temperaturmessung der Dichtlippe 10 eingezeichnet. Die Anbringung weiterer Sensoren ist möglich, der Übersichtlichkeit halber jedoch in dieser Figur weggelassen. Der Stator 15 und der Sensor 18 sind über die Leitungen 19, 20 mit der auf der Außenseite des Radialwellendichtrings 2 angeordneten Spannungsreglung, Signalaufbereitung und Sendemodul 21 verbunden. Alle diese Teile sind hier zu einem Paket zusammengefasst und auf der Außenseite des Radialwellendichtrings 2 angebracht. Die in dieser Einheit erzeugten Signale werden, wie mit der gestrichelten Linie 22 angedeutet, dem Empfangsmodul und Rechner 3 übermittelt und dort ausgewertet.

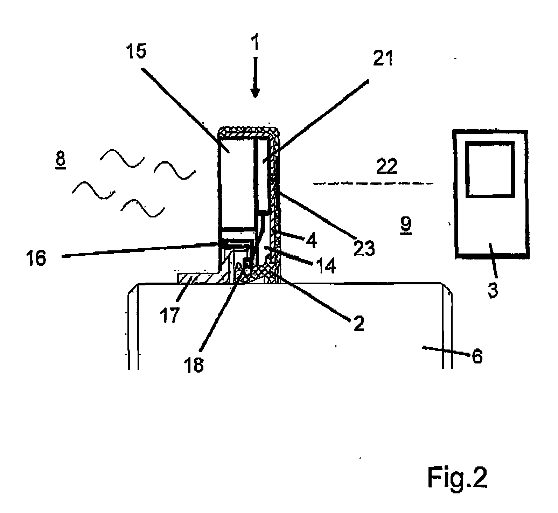

In der Figur 2 ist im Wesentlichen der gleiche Aufbau wie in der Figur 1 für die Dichtungsanordnung 1 gewählt, mit der Abweichung, dass die Einheit aus Spannungsreglung, Signalaufbereitung und Sendemodul ebenfalls im Innenraum 14 untergebracht sind, die Antenne 23 jedoch auf der Außenseite des Stützkörpers 4 liegt, so dass sie ungehindert ihre Signale dem Empfangsmodul mit Rechner 3 übermitteln kann. Die Antenne 23 ist dabei als eine Ausführungsform als Ringantenne ausgeführt und über den gesamten Umfang des Stützkörpers 4 angebracht.

## Patentansprüche

1. Dichtungsanordnung mit einem ein dynamisches Dichtelement haltenden Stützkörper und wenigstens einem Sensor zur Erfassung von Betriebszuständen, insbesondere der Drehzahl, Drehrichtung und Wellenwinkel der Welle, der Temperatur des Dichtelements und dem Druck des abzudichtenden Mediums und mit einem Stator zur Erzeugung elektrischer Energie, der mit einem mit der Welle verbundenen Mulfipolencoder zusammenwirkt, sowie einem Spannungsregler, einer Signalaufbereitung, einem Sendemodul für eine drahtlose Signalübertragung, einer Antenne und einem Empfangsmodul mit einem Rechner für die Signale des Sendemoduls, **dadurch gekennzeichnet, dass** der Stützkörper 4 einen äußeren Ringflansch (13) hat, der mit dem Dichtelement (5) und der axialen Wand des Stützkörpers (4) einen Innenraum 14 bildet und bei dem der bzw. die Sensoren (18) und der Stator (15) m Innenraum (14) integriert sind.

2. Dichtungsanordnung nach Anspruch 1, **dadurch gekennzeichnet, dass** der Multipolencoder (16) an einem mit der Welle (6) verbundenen Träger (17) angeordnet ist und zwischen dem Dichtelement (5) und dem Stator (15) eingefügt ist.

3. Dichtungsanordnung nach Anspruch 1 oder 2, **dadurch gekennzeichnet, dass** der Spannungsregler, die Signalaufbereitung und das Sendemodul im Innenraum (14) angeordnet sind.

4. Dichtungsanordnung nach einem der Ansprüche 1 bis 3, **dadurch gekennzeichnet, dass** der Stützkörper (4) auf seiner Außenseite von einer Elastomerschicht (7) ummantelt ist.

5. Dichtungsanordnung nach einem der Ansprüche 1 bis 4, **dadurch gekennzeichnet, dass** die Antenne (23) des Sendemoduls auf der axialen Außenseite des Stützkörpers (4) angeordnet ist.

6. Dichtungsanordnung nach Anspruch 5, **dadurch gekennzeichnet, dass** die Antenne (23 als Ringantenne auf der axialen Außenseite des Stützkörpers (4) angeordnet ist.

7. Dichtungsanordnung nach einem der Ansprüche 1 bis 6, **dadurch gekennzeichnet, dass** der Spannungsregler, die Signalaufbereitung und das Sendemodul mit Antenne zu einer Einheit (21) zusammengefasst auf der axialen Außenseite des Stützkörpers (4) angeordnet sind.

8. Dichtungsanordnung nach einem der Ansprüche 1 bis 7, **dadurch gekennzeichnet, dass** das Dichtelement (5) eine Dichtlippe (10) hat, die von einer Spannfeder (11) an die Welle (6) gedrückt wird.

9. Dichtungsanordnung nach einem der Ansprüche 1 bis 8, **dadurch gekennzeichnet, dass** das Dichtelement (5) mit einer Staublippe (12) versehen ist.

10. Dichtungsanordnung nach einem der Ansprüche 1 bis 10, **dadurch gekennzeichnet, dass** die im Innenraum (14) angeordneten Teile (15,16) über Elektroleitungen (19, 20) mit auf der axialen Außenseite des Stützkörpers (4) angeordneten Teilen (21) verbunden sind.

11. Dichtungsanordnung nach einem der Ansprüche 1 bis 10, **dadurch gekennzeichnet, dass** die Leitungen (19,20) abgedichtet durch die Elastomerschicht (7) hindurchgeführt sind.
